# EUROPEAN PATENT APPLICATION

(11) **EP 2 128 770 A2**
(43) Date of publication of application: **02.12.2009**
(21) Application number: 09161005.5
(22) Date of filing: 25.05.2009
(51) Int. Cl.: G06F 11/36

(54) **System and method for message-queue-based server testing**

(30) Priority: 29.05.2008 US 154993
(71) Applicant: Hewlett-Packard Development Company, L.P., Houston, TX 77070 (US)
(72) Inventor: Gibbs, Steven J., Sterling Heights MI 48312 (US)
(74) Representative: Franks, Adam Peter

(57) **Abstract**

A system for testing a banking transactions server. The system includes a storage medium storing a plurality a simulated banking transactions. The system also includes a script engine executing on a processor. The system also includes a plurality of templates useable by the script engine. The script engine tests a banking transactions server by transmitting a series of simulated banking transactions to a message queue on the banking transactions server. There is also a method including storing a plurality a simulated banking transactions in a storage medium. The method also includes executing a script engine on a processor. The method also includes testing a banking transactions server by transmitting a series of simulated banking transactions to a message queue on the banking transactions server.

## Description

### TECHNICAL FIELD

The present disclosure is directed, in general, to data processing system test systems and methods.

### BACKGROUND OF THE DISCLOSURE

Any data processing system should be tested on deployment and periodically thereafter to ensure reliability.

### SUMMARY OF THE DISCLOSURE

According to one disclosed embodiment, there is provided a system for testing a banking transactions server. The system includes a storage medium storing a plurality a simulated banking transactions. The system also includes a script engine executing on a processor. The system also includes a plurality of templates useable by the script engine. The script engine tests a banking transactions server by transmitting a series of simulated banking transactions to a message queue on the banking transactions server.

According to another disclosed embodiment, there is provided a system for testing a server data processing system. The system includes a storage medium storing a plurality a test data records. The system includes a script engine executing on a processor and a plurality of templates useable by the script engine. The script engine tests the server data processing system by transmitting a series of test data records to a message queue on the server data processing system.

According to another disclosed embodiment, there is provided a method including storing a plurality a simulated banking transactions in a storage medium. The method also includes executing a script engine on a processor. The method also includes testing a banking transactions server by transmitting a series of simulated banking transactions to a message queue on the banking transactions server.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:

Figure 1 depicts a block diagram of a data processing system in which an embodiment can be implemented;

Figure 2 depicts a block diagram of a client data processing system communicating over network with a server/mainframe data processing system, in accordance with disclosed embodiments;

Figure 3 depicts a process for initialization of queues and parameters, in accordance with a disclosed embodiment;

Figure 4 depicts a process for iteration of parameters, in accordance with a disclosed embodiment;

Figure 5 depicts a process for processing certain message queue messages, in accordance with a disclosed embodiment;

Figure 6 depicts a process to validate received message queue messages, in accordance with a disclosed embodiment;

Figure 7 depicts a process to validate save logged events per virtual user, in accordance with a disclosed embodiment; and

Figure 8 depicts a block diagram of an overall system flow according to a disclosed embodiment.

### DETAILED DESCRIPTION

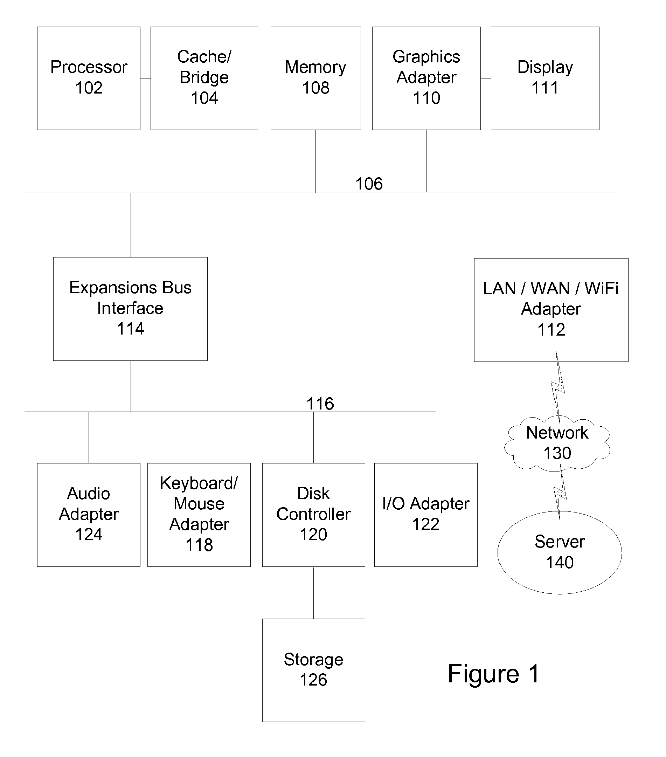

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Any data processing system should be tested. Some systems, however, are mainframe or server-based systems that are designed to interact with client systems, including client data processing systems and special-purpose devices such as credit card readers. The disclosed systems and methods enable a client system to test a message-queue based server system.

In one particular, non-limiting example, a disclosed system can simulate card transactions to a banking server system. For example, such a system can provide 300 or more imitated credit cart transactions per second to a message-queue based server system. This can be only accomplished with a performance testing tool, however no tool exists today that can simulate a credit card reader transaction to a mainframe.

Figure 1 depicts a block diagram of a data processing system in which an embodiment can be implemented. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network /Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, etc.

Those of ordinary skill in the art will appreciate that the hardware depicted in Figure 1 may vary for particular. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

Data processing system 100 can be used to test server system 140 as disclosed herein. As discussed herein server system 140 can be a message-queue based server system, and in a particular implementation, can be a banking system.

Message queues provide an asynchronous communications protocol, meaning that the sender and receiver of the message do not need to interact with the message queue at the same time. Messages placed onto the queue are stored until the recipient retrieves them.

Some message queues provide for the passing of messages between different computer systems, potentially connecting multiple applications and multiple operating systems. These message queueing systems typically provide enhanced resilience functionality to ensure that messages do not get "lost" in the event of a system failure. Examples of commercial implementations of this kind of message queueing software (also known as "Message Oriented Middleware") include IBM's WebSphere® MQ (formerly MQ Series), Oracle Advanced Queuing (AQ) within an Oracle® database, and Microsoft's MSMQ. The systems and methods described herein can be applied to any message-queue based system, including but not limited to these. As used herein, the acronym "MQ" refers to a "message queue" and message queue software generically, and only refers to the IBM WebSphere® MQ product when so specifically stated.

In particular, some banking systems, used for example for processing credit card transactions, use a message queue to receive and store incoming transactions, so that the server can retrieve and process them at its own rate.

Customer Information Control System (CICS) is a transaction server, well known to those of skill in the art. CICS is a transaction processing system designed for both online and batch-processing activity. A transaction is basically a set of operations performing a task. Usually, the majority oftransactions are relatively simple tasks such as updating the balance of an account. CICS is used in bank teller applications, ATM systems etc.

The disclosed systems and methods can be used for testing a credit-cart processing server. In such an embodiment, the transactions, generated on client data processing system 100, are communicated to a message queue on a server system 140. The message queue is read by a CICS region of server 140. Server 140 must think that the transaction came from another mainframe/server system. The credit card data must have specifically utilized a format that simulates a credit card enquiry and authorizations based on requirements of credit card providers such as MasterCard and Visa.

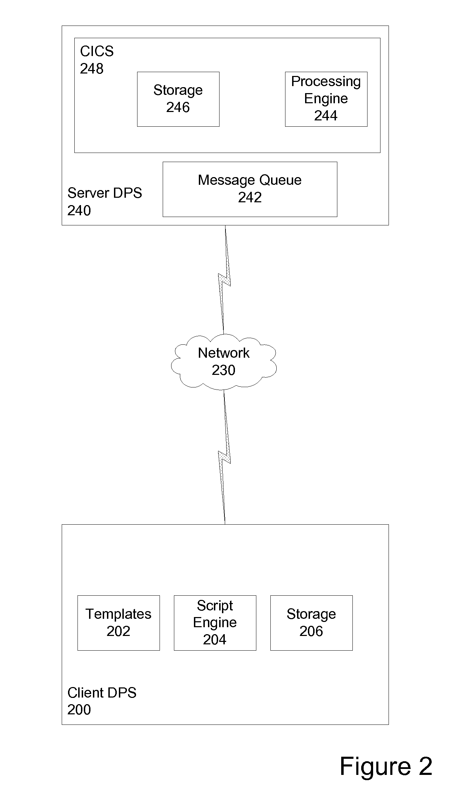

Figure 2 depicts a block diagram of a client data processing system 200 communicating over network 230 with a server/mainframe data processing system 240, in accordance with disclosed embodiments. Of course, in other embodiments, client 200 and server 230 may communicate directly rather than over a network, as known to those of skill in the art.

Client 200, which may be otherwise implemented as a data processing system 100, also includes templates 202, script engine 204, and storage 206, as will be described in more detail below.

Server 240, which may be otherwise implemented as a data processing system 100, also includes message queue 242, CICS region 248, processing engine 244, and storage 246, as will be described in more detail below.

The disclosed embodiments can be implemented, for example, using a combination of three standard tools and specific scripting techniques. A set of scripts simulate credit card authorizations, inquiries and other credit card account operations.

Three commercially-available tools are that can be used to implement the disclosed embodiments are: the HP® LoadRunner software, IBM® MQ-Tester software and IBM® WebSphere® MQ message-queue software.

The scripts are all written in the C programming language, make calls to specific APIs within the IBM® MQ-Tester software components. The scripts are stored in storage 206 and executed by script engine 204. This in turn communicates to the message queue 242, such as implemented with IBM® WebSphere® MQ message-queue software. The message queue 242 is setup with various queues, send and receive channels which communicate with the CICS region 248 of the server system 240 which in turn acts upon the using processing engine 244, as it would operated normally, whether performing banking functions or otherwise.

Script engine 204 can generate the required test data either in realtime, or can load test data from storage 206 that has been created previously by the script engine 204 or other load generation software.

Processing engine 244 executes the specific MQ requests just as a standard card reader would have sent, and performs any required updates to records stored in storage 246. The returning request is then sent back to the script engine 204 of client 200 though another call to message queue 242 call. Script engine 204 receives the queue's message and analyzes it for what action to take.

In certain embodiments, two standard templates 202 are used for any type of transaction, not just limited to the credit card industry. While shown separately here, templates 202 are also typically stored in storage 206. These templates can be used for other industries that communicate via MQ to a mainframe. In this way, one script type that can be utilized with two different techniques.

An automated result analyzer is built into all the scripts for result tracking of every request made. This enables the system to analyze the credit card data base validity and aided in determining which credit cards are usable for testing. This will also allows the ability to create valid databases.

The scripts used in some embodiments are unique from any other type of LoadRunner script today. First they can not be recorded only written and executed. Secondly they have intelligence built in to know what load generator they are being executed from. This is useful when the returning message is to be processed by the correct load generator and the correct virtual user that made the request. Typically, a LoadRunner controller executes transactions from any number of load generators.

The scripts also have a built in capability to keep track of every type of credit card error that can be generated from the mainframe like an audit trail.

The scripts engine 204 also perform all the translations between a standard load generator, e.g. on client 200, which can be a desktop personal computer, a laptop, or a server system, and the server 240. This can includes ASCII to EBCDIC translations, EBCDIC to ASCII translations, and packed unsigned and signed decimal translations.

These disclosed embodiments are not limited to credit cards but apply to any type of transaction that uses a message queue such as IBM® WebSphere® MQ-Series from a PC to a mainframe.

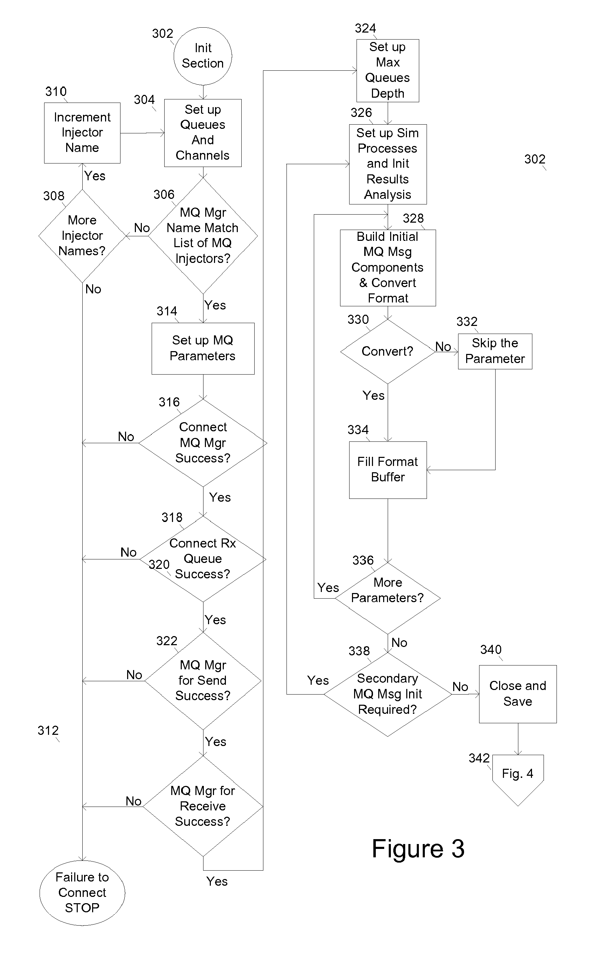

Figure 3 depicts a process for initialization of queues and parameters, in accordance with a disclosed embodiment. At step 302, the section is initialized.

At step 304, the system will setup queues and channels for the message queue. At step 306, the system checks whether the message queue manage name matches the list of message queue injectors. If not, at step 308, the system checks if any more injector names are in the list. If so, at step 310, the system will increment to the next injector name, and return to step 304.

If there are no more injector names in the list, at step 308, the system registers a failure to connect to the message queue manager, at step 312, and stops.

If the message queue manager name matches the list of message queue injectors, at step 306, then the system will setup all the message queue parameters, at step 314, which can include IP addresses, ports, send, receive, and wait parameters, and others.

At step 316, the system determines whether the connect to the message queue manager was successful. If not, the system registers a failure to connect to the message queue manager, at step 312, and stops.

If so, at step 318, the system determines whether the connect to the receiver queue was successful. If not, the system registers a failure to connect to the message queue manager, at step 312, and stops.

If so, at step 320, the system determines whether an open and inquire to the message queue manager send was successful. If not, the system registers a failure to connect to the message queue manager, at step 312, and stops.

If so, at step 322, the system determines whether an open and inquire to the message queue manager receive was successful. If not, the system registers a failure to connect to the message queue manager, at step 312, and stops.

If so, at step 324, the system sets up the maximum queues depth. At step 326, the system sets up simulation processes and initializes the results analysis. At step 328, the system builds the initial message queue messages components and converts each parameter's format, as required.

At step 330, the system determines what conversion is necessary and performs the necessary conversions. These can include converting data to EBCDIC format, converting data to ASCII format, converting data to COMP3 format, and converting data to COMP format. If no conversion is necessary, at step 332, the system will skip the parameter.

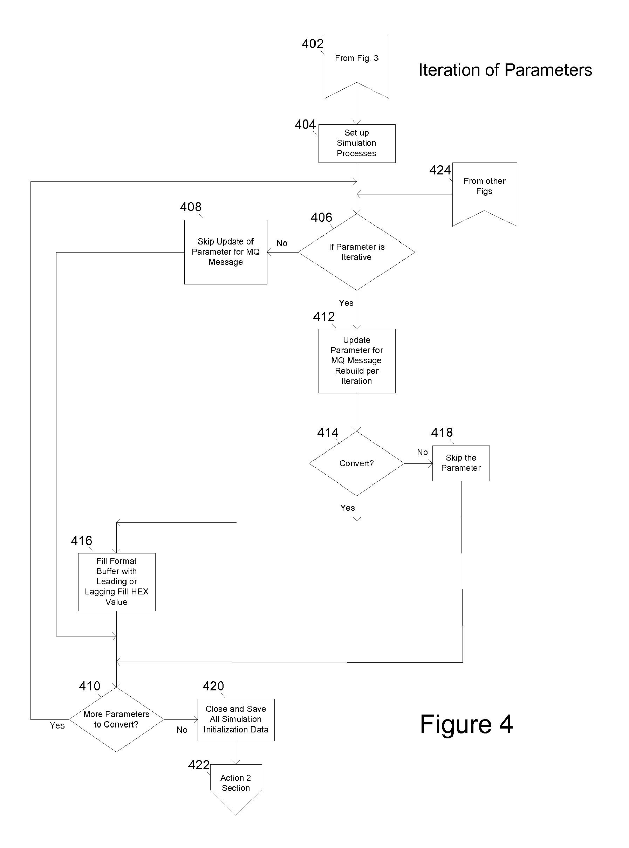

At step 334, the system fills the format buffer with any necessary leading lagging fill HEX value. At step 336, the system determines whether there are more there are more parameters to convert, and if so, returns to step 328. If not, at step 338, the system determines whether secondary message queue initialization is required, and if so, returns to step 326. If not, at step 340, the system closes and saves all simulation initialization data, and proceeds at step 342 to the process described in Figure 4.

Figure 4 depicts a process for iteration of parameters, in accordance with a disclosed embodiment. At step 402, this process continues from that depicted in Fig. 3.

At step 404, the system sets up simulation processes. At step 406, the system determines if the parameter is iterative. Note that the process can also continue at step 406 from that depicted in other figures, as described below. If the parameter is not iterative, at step 408 the system skips the update of the parameter for the message queue message. The system determines if there are more parameters to convert, at step 410, and if so, repeats to step 406.

If, at step 406, the system determined that the parameter is iterative, the system updates the parameter for the message queue message rebuild for each iteration, at step 412.

At step 414, the system determines what conversion is necessary and performs the necessary conversions. These can include converting data to EBCDIC format, converting data to ASCII format, converting data to COMP3 format, and converting data to COMP format. At step 334, the system fills the format buffer with any necessary leading lagging fill HEX value.

If no conversion is necessary at step 414, then at step 418, the system will skip the parameter.

The system determines if there are more parameters to convert, at step 410, and if so, repeats to step 406.

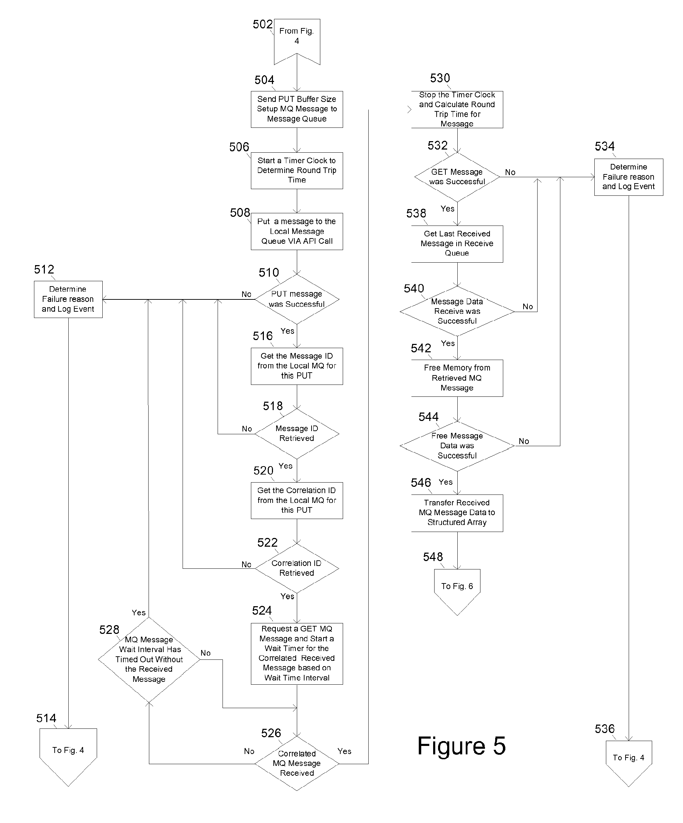

If there are not more parameters to convert at step 410, the system closes and saves all simulation initialization data at step 420, and proceeds at step 422 to the process described in Figure 5.

Figure 5 depicts a process to PUT and get MQ messages, in accordance with a disclosed embodiment. At step 502, this process continues from that depicted in Fig. 4.

At step 504, the system sends a PUT buffer size setup message to the message queue, which can be a Websphere MQ message queue. At step 506, the system starts a timer clock to determine the total round trip time to the server system. At step 508, the system puts a message to the local message queue via an API call.

At step 510, the system determines if the PUT message was successful. If it was not, at step 512, the system determines the failure reason and logs the event. At step 514, the process returns to that illustrated in Fig. 4, entering at step 424.

If the PUT message was successful at step 510, at step 516 the system gets the message ID from the local message queue for that PUT. If the message ID is not received at step 518, at step 512 the system determines the failure reason and logs the event. At step 514, the process returns to that illustrated in Fig. 4, entering at step 424.

At step 520, the system gets the correlation ID from the local message queue for that PUT. If the correlation ID is not received at step 522, at step 512 the system determines the failure reason and logs the event. At step 514, the process returns to that illustrated in Fig. 4, entering at step 424.

At step 524, the system requests a GET MQ message and starts a wait timer for the correlated received message based on the wait time interval. If the correlated message is not received at step 526, the system determines at step 528 if the MQ message wait interval has timed out without receiving the correlated message. If not, the returns to step 526 to wait for the message. If the interval has timed out, , at step 512 the system determines the failure reason and logs the event. At step 514, the process returns to that illustrated in Fig. 4, entering at step 424.

When the correlated message is received at step 526, the system stops the timer clock and calculates the round trip time for the message at step 530.

At step 532, the system determines if the GET message was successful. If not, at step 534 the system determines the failure reason and logs the event. At step 536, the process returns to that illustrated in Fig. 4, entering at step 424.

If the GET message was successful at step 532, the system gets the last received message in the receive queue at step 538, and at step 540, determines if the message data receive was successful. If not, at step 534 the system determines the failure reason and logs the event. At step 536, the process returns to that illustrated in Fig. 4, entering at step 424.

If the message data receive was successful, the system frees the memory frm the retrieved MW message at step 542, and determines at step 544 if the free message data was successful. If not, at step 534 the system determines the failure reason and logs the event. At step 536, the process returns to that illustrated in Fig. 4, entering at step 424.

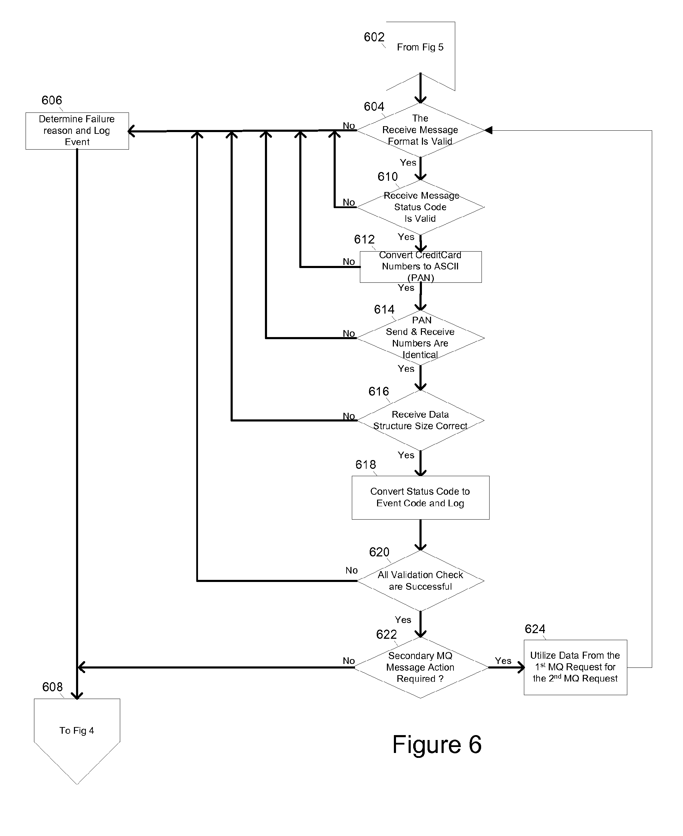

If the free message data was successful, the system transfers the received MQ message data to a structured array, and the process continues, at step 548, to the process described in Fig. 6.

Figure 6 depicts a process to validate received MQ messages, in accordance with a disclosed embodiment. At step 602, this process continues from that depicted in Fig. 5.

At step 604, the system determines if the received MW message data formatted as a valid MQ message. If not, at step 606 the system determines the failure reason and logs the event. At step 608, the process returns to that illustrated in Fig. 4, entering at step 424.

If the received message format is value, the system determines at step 610 if the received message status code is valid. If not, at step 606 the system determines the failure reason and logs the event. At step 608, the process returns to that illustrated in Fig. 4, entering at step 424.

At step 612, the system converts the credit card number, the personal account number (PAN), or other data (referred to generically as PAN below), to ASCII. If this is not succesful, at step 606 the system determines the failure reason and logs the event. At step 608, the process returns to that illustrated in Fig. 4, entering at step 424.

At step 614, the system determines if the PAN send and receive numbers are identical. If not, at step 606 the system determines the failure reason and logs the event. At step 608, the process returns to that illustrated in Fig. 4, entering at step 424.

If the PAN send and receive numbers are identical, at step 616, the system determines if the receive data structure size is correct. If not, at step 606 the system determines the failure reason and logs the event. At step 608, the process returns to that illustrated in Fig. 4, entering at step 424.

If the receive data structure size is correct, the system converts the status code to an event code and stores this data is a log at step 618. At step 620, the system determines if all validation checks are successful. If not, at step 606 the system determines the failure reason and logs the event. At step 608, the process returns to that illustrated in Fig. 4, entering at step 424.

If all validation checks are successful, at step 622, the system determines if any secondary MQ message action is required. If not, then at step 608, the process returns to that illustrated in Fig. 4, entering at step 424.

If secondary MQ message action is required, then at step 624, the process utilizes data from the first MQ request for the second MQ request, and returns to step 604 to validate the second MQ request.

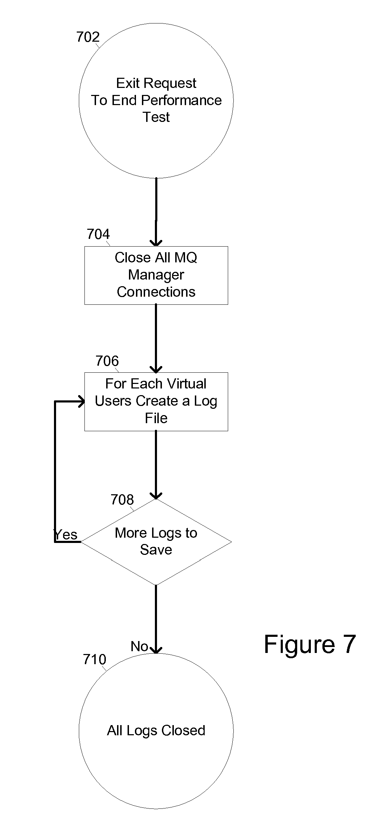

Figure 7 depicts a process to validate save logged events per virtual user, in accordance with a disclosed embodiment.

At step 702, the system receives an exit request to end a performance test. At step 704, the system closes all message queue manager connections.

At step 706, the system creates a log file for each virtual user, storing all relevant data. At step 708, the system determines if there are more logs to save, and if so, repeats to step 706. At step 710, all logs are stored and closed.

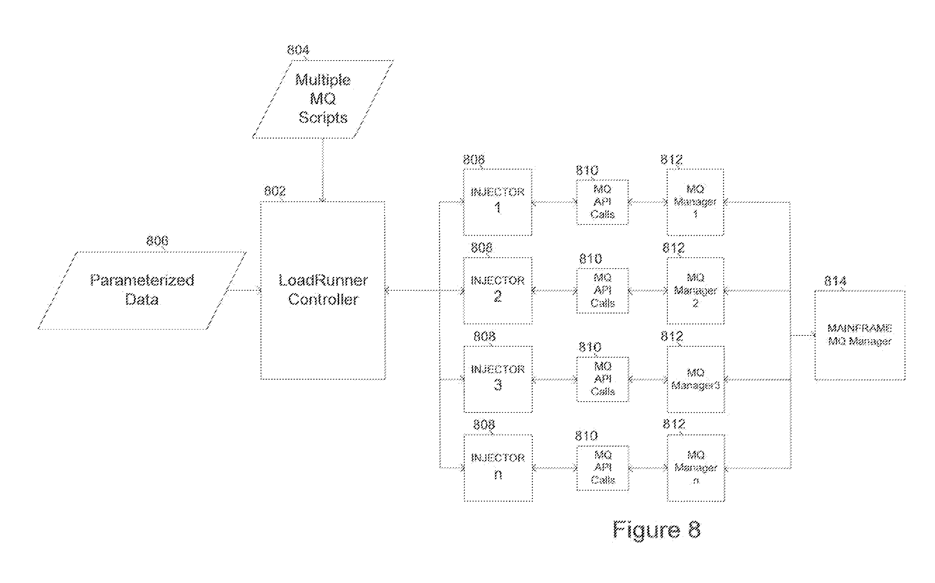

Figure 8 depicts a block diagram of an overall system flow according to a disclosed embodiment. Here, a LoadRunner controller 812, which can be implemented as a client system 200 described above, receives multiple MQ scripts 804 and parameterized data 806, and performs functions as described above. LodeRunner controller 812 communicates with a plurality of injectors 808.

Each injector 808 communicates with MQ API calls 810, and these each communicate with an MQ manager 812.

The MQ managers 812 communicate with the mainframe MQ maganger 814, which can be implemented as a mainframe/server 240, described above.

The disclosed embodiments includes a new methodology to emulate credit cards transactions without the credit card reader. The disclosed embodiments can generate loads and stress through a new type of test scripts using MQ transaction protocols, and can test end to end via MQ messages between a laptop or PC to a mainframe, where the mainframe "thinks" it is communicating with another mainframe.

The disclosed embodiments handle translating all ASCII to EBCDIC, EBCDIC to ASCII, Numbers to BDC packed decimal BCD packed decimal back to Numbers and convert all other types of COBOL variables for client data processing systems. Disclosed embodiments include combining together the parameters, MQ server type scripts, MQTest, MQ WebSphere Explorer to communicate and emulate any type of MQSeries communication to a Mainframe program, and creating an internal logging system with every script to keep track of every communication result per every iteration per every virtual user.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of a instructions contained within or encoded on a machine usable medium in any of a variety of forms, and that the present disclosure applies equally regardless of the particular type of instruction or signal bearing medium utilized to actually carry out the distribution. Examples of machine usable or machine readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke paragraph six of 35 USC § 112 unless the exact words "means for" are followed by a participle.

## Claims

**1.** A system for testing a banking transactions server, comprising:
a storage medium storing a plurality a simulated banking transactions;
a script engine executing on a processor; and
a plurality of templates useable by the script engine,
wherein the script engine tests a banking transactions server by transmitting a series of simulated banking transactions to a message queue on the banking transactions server.

**2.** The system of claim 1, wherein the script engine also performs data translations to produce the simulated banking transactions.

**3.** The system of claim 2, wherein data translations comprise at least one of ASCII to EBCDIC translations, EBCDIC to ASCII translations, and packed unsigned and signed decimal translations.

**4.** The system of claim 1, 2, or 3, wherein the script engine also receives a response from the message queue.

**5.** The system of claim 1, 2, 3, or 4, wherein the script engine also analyzes results of messages returned from the message queue.

**6.** The system of any preceding claim, wherein the script engine prepares the banking transactions according to at least one of the templates before transmitting to the message queue.

**7.** The system of any preceding claim, wherein the simulated banking transactions are transmitted to the message queue as if they were transactions from an automated teller machine.

**8.** The system of any preceding claim, wherein the script engine executes on a client data processing system.

**10.** The system of any preceding claim, wherein the script engine executes on a laptop data processing system.

**11.** A system for testing a server data processing system, comprising:
a storage medium storing a plurality a test data records;
a script engine executing on a processor; and
a plurality of templates useable by the script engine,
wherein the script engine tests the server data processing system by transmitting a series of test data records to a message queue on the server data processing system.

**12.** The system of claim 11, wherein the script engine also performs data translations to produce the test data records.

**13.** The system of claim 12, wherein data translations comprise at least one of ASCII to EBCDIC translations, EBCDIC to ASCII translations, and packed unsigned and signed decimal translations.

**14.** The system of claim 11 or 12, wherein the script engine also receives a response from the message queue.

**15.** The system of claim 11, 12, or 13, wherein the script engine also analyzes results of messages returned from the message queue.
